# EUROPÄISCHE PATENTANMELDUNG

(11) **EP 1 845 739 A1**
(43) Veröffentlichungstag der Anmeldung: **17.10.2007**
(21) Anmeldenummer: 06007732.8
(22) Anmeldetag: 12.04.2006
(51) Int. Cl.: H04Q 7/32

(54) **Verfahren zur Überwachung von benachbarten Funkzellen**

(71) Anmelder: NOKIA SIEMENS NETWORKS GMBH & CO. KG, 81541 München (DE)
(72) Erfinder: Hofmann, Jürgen, 86504 Merching (DE)

(57) **Zusammenfassung**

Die Erfindung betrifft ein Verfahren zur Überwachung von benachbarten Funkzellen, bei dem ein Funkkommunikationsendgerät, das einer ersten Funkzelle zugeordnet ist, zur Erstellung eines Messwertreports Signale von Basisstationen benachbarter Funkzellen überwacht. Das Funkkommunikationsendgerät kann mit zwei voneinander unabhängigen Empfängern auf der gleichen oder auf verschiedenen Trägerfrequenzen gleichzeitig einen Verkehrskanal empfangen und verwendet beide Empfänger zur Überwachung von Signalen benachbarter Basisstationen.

## Beschreibung

Die Erfindung betrifft ein Verfahren zur Überwachung von benachbarten Funkzellen, bei dem ein Funkkommunikationsendgerät, das einer ersten Funkzelle zugeordnet ist, zur Erstellung eines Messwertreports Signale von Basisstationen benachbarter Funkzellen überwacht.

Bei bekannten Funkkommunikationssystemen, die gemäß dem GSM/EDGE-Funkübertragungsstandard ausgestaltet sind, werden zur Erhöhung der Funkübertragungskapazität einerseits so genannte "Frequency-Hopping"-Verfahren innerhalb einer betrachteten Funkzelle und andererseits kleine Frequenzwiederholungsfaktoren bei benachbarten Funkzellen verwendet.

Bei derartigen Funkkommunikationssystemen überschneiden bzw. überlappen sich benachbarte Funkzellen im allgemeinen in einem schmalen, räumlichen Bereich, dem Überlappungsbereich. Innerhalb dieses Überlappungsbereichs muss eine geforderte Funkverbindungsqualität, die als "Radio Link Quality" bezeichnet wird, eingehalten werden - gegebenenfalls ist eine als "Handover" bezeichnete Verbindungsübergabe von einer ersten versorgenden Basisstation bzw. ersten Funkzelle zu einer zweiten versorgenden Basisstation bzw. zweiten Funkzelle durchzuführen.

Insbesondere bei den genannten schmalen Überlappungsbereichen ist es notwendig, eine Verbindungsübergabe schnell durchführen zu können, um eine rapide Verschlechterung der Funkverbindungsqualität oder gar einen Verbindungsabbruch zu vermeiden.

Zur Vorbereitung bzw. Durchführung einer Verbindungsübergabe ist es bekannt, seitens einer Funkstation bzw. eines Funkkommunikationsendgeräts jeweilige Signale benachbarter Basisstationen bzw. benachbarter Funkzellen durch Messung zu überwachen. Diese Überwachung wird als "Monitoring" bezeichnet.

Seitens des Funkkommunikationsendgeräts wird mit Hilfe eines Empfängers, der sowohl zum Empfang von Verkehrskanälen als auch zur Überwachung benachbarter Funkzellen verwendet wird, aus gemessenen Signalwerten ein Messwertreport zusammengestellt. Der Messwertreport wird über eine aktuell versorgende Basisstation an eine netzseitige Kontrollstation übertragen. Diese entscheidet dann über die Notwendigkeit bzw. über den Zeitpunkt einer Verbindungsübergabe.

Ein Funkkommunikationsendgerät eines GSM/EDGE-Funkkommunikationssystems erhält über einen SACCH-Signalisierungskanal der versorgenden Basisstation Systeminformationen und so genannte "Basisstationsidentifier, BSIC" von gültigen benachbarten Funkzellen übermittelt. Basierend darauf beginnt es Signalstärken der Funkzellen zu messen.

Insbesondere für sich schnell bewegende Funkkommunikationsendgeräte, die sich in räumlich schmalen Überlappungsbereichen von Funkzellen befinden, ist es notwendig, den Messwertreport schnell zu erstellen und zu übertragen.

Dies ist auch in schwierigen Umgebungen wie in Städten o.ä. notwendig. Aufgrund der dort vorhandenen abgeschotteten Empfangssituation sind bislang bekannte Handover-Verfahren oft zu langsam und damit nur mit beträchtlichen Einbußen einsetzbar.

Es ist daher Aufgabe der vorliegenden Erfindung, ein Verfahren zur Überwachung von benachbarten Funkzellen anzugeben, mit dem auch in schwieriger Umgebung eine notwendige Verbindungsübergabe schnell durchgeführt werden kann.

Diese Aufgabe wird durch die Merkmale des Patentanspruchs 1 gelöst. Vorteilhafte Weiterbildungen sind in den Unteransprüchen angegeben.

Beim erfindungsgemäßen Verfahren werden vorteilhaft Funkkommunikationsendgeräte eingesetzt, die innerhalb der GERAN-Standardisierung, basierend auf dem so genannten "3GPP GERAN", Release 7, nicht nur einen sondern zwei Empfänger aufweisen, um ein so genanntes "Dual-Carrier-Übertragungsverfahren" in Downlink-Richtung durchführen zu können.

Die beiden Empfänger sind dabei voneinander unabhängig und können sowohl einzeln als auch gemeinsam verwendet werden, wobei die beiden Empfänger zwar zeitgleich jedoch auf unterschiedlichen Trägerfrequenzen empfangen können.

Die verwendeten Trägerfrequenzen, die zum basisstationsseitigen Senden und somit zum Empfang seitens des Funkkommunikationsendgeräts verwendet werden, werden seitens der versorgenden Basisstation zueinander synchronisiert.

Dies bedeutet, dass für einen gemeinsamen Zeitschlitz bei Benutzung eines TDMA-Idle-Rahmen oder eines TDMA-Search-Rahmen jeweilige Rahmen für beide Trägerfrequenzen gleich sind.

Somit ist es möglich, für Messungen benachbarter Funkzellen bzw. zur Messwertbestimmung die beiden Empfänger gleichzeitig zu verwenden.

Durch das erfindungsgemäße Verfahren können benachbarte Funkzellen schnell überwacht werden.

Vorteilhafterweise werden die benachbarten Funkzellen bzw. deren Basisstationen zu Gruppen zusammengefasst, wobei die Zuordnung zu den Gruppen beispielsweise anhand einer Position in einer Nachbarzell-Liste oder anhand des "Basisstationsidentifier, BSIC" der Basisstationen erfolgen kann.

Ebenso kann die Zuordnung zu den Gruppen anhand des Frequenzbandes erfolgen, wenn der Empfänger auf mehreren Frequenzbändern empfangen kann.

Ein erster Empfänger des Funkkommunikationsendgeräts kann dann eine erste Gruppe überwachen, während ein zweiter Empfänger des Funkkommunikationsendgeräts eine zweite Gruppe der benachbarten Funkzellen überwachen kann. Die jeweiligen Messwerte werden zu einem Messwertreport zusammengefasst und an die Netzseite übertragen.

Dabei ist es denkbar, eine feste Zuordnung von Basisstationen zu jeweiligen Gruppen vorzunehmen oder die Zuordnung gesteuert durch die Netzseite vorzunehmen und die Zuordnung dem Funkkommunikationsendgerät mitzuteilen.

Überwacht beispielsweise der erste Empfänger Basisstationen, die in der von der versorgenden Basisstation gesendeten Systeminformation innerhalb der Liste der Nachbarzellen an ungeradzahligen Positionen (1, 3, 5, 7, usw.) stehen, dann erfolgt eine Überwachung der Basisstationen, die innerhalb der Liste der Nachbarzellen an geradzahligen Positionen stehen (2, 4, 6, 8, usw.) durch den zweiten Empfänger. Auf diese Art und Weise ist es möglich, die benachbarten Funkzellen mit doppelter Geschwindigkeit abzutasten als gemäß dem bekannten Stand der Technik mit nur einem Empfänger.

Außerdem ist es aufgrund der unabhängigen beiden Empfänger auch möglich, dass der erste Empfänger die Überwachung der benachbarten Funkzellen übernimmt, während der zweite Empfänger gleichzeitig Nutzdaten über den Verkehrskanal der versorgenden Basisstation empfängt.

In einer vorteilhaften Weiterbildung wird der Messwertreport aus den Meßwerten der am stärksten empfangenen Basisstationssignale beider Gruppen in geeigneter Weise gebildet und an das Netzwerk übertragen, um gegebenenfalls eine Verbindungsübergabe schnell vornehmen zu können.

## Patentansprüche

1. Verfahren zur Überwachung von benachbarten Funkzellen
- bei dem ein Funkkommunikationsendgerät, das einer ersten Funkzelle zugeordnet ist, zur Erstellung eines Messwertreports Signale von Basisstationen benachbarter Funkzellen überwacht,
- bei dem das Funkkommunikationsendgerät mit zwei voneinander unabhängigen Empfängern auf der gleichen oder auf verschiedenen Trägerfrequenzen gleichzeitig einen Verkehrskanal empfangen kann und
- bei dem das Funkkommunikationsendgerät beide Empfänger zur Überwachung von Signalen benachbarter Basisstationen verwendet.

2. Verfahren nach Anspruch 1,
- bei dem die zu überwachenden Basisstationen durch Zuordnung in zumindest zwei Basisstationsgruppen aufgeteilt werden,
- bei dem eine erste Basisstationsgruppe durch einen ersten Empfänger des Funkkommunikationsendgeräts überwacht wird, und
- bei dem eine zweite Basisstationsgruppe durch einen zweiten Empfänger des Funkkommunikationsendgeräts überwacht wird.

3. Verfahren nach Anspruch 2,
- bei dem eine das Funkkommunikationsendgerät versorgende Basisstation dem Funkkommunikationsendgerät die Zuordnung der Basisstationen der benachbarten Funkzellen zu den jeweiligen Basisstationsgruppen signalisiert, und
- bei dem den Basisstationsgruppen eine Priorität zugewiesen wird.

4. Verfahren nach einem der vorhergehenden Ansprüche, bei dem für den Fall, dass beide Empfänger zum Empfang von Signalen benachbarter Basisstationen in mehreren Frequenzbändern ausgebildet sind, die versorgende Basisstation eine Frequenzband-Zuordnung zu den beiden Empfängern signalisiert.

5. Verfahren nach Anspruch 2, bei dem beide Basisstationsgruppen derart gebildet werden, dass sie sich entsprechen.
